# EUROPÄISCHE PATENTSCHRIFT

(11) **EP 2 502 057 B1**
(45) Veröffentlichungstag und Bekanntmachung des Hinweises auf die Patenterteilung: **01.01.2020**
(21) Anmeldenummer: 10818070.4
(22) Anmeldetag: 17.11.2010
(51) Int. Cl.: G01N 25/48, H01L 35/18

(54) **SYSTEM UND VERFAHREN ZUR THERMISCHEN ANALYSE**
SYSTEM AND METHOD FOR THERMAL ANALYSIS
SYSTÈME ET PROCÉDÉ D'ANALYSE THERMIQUE

(30) Priorität: 20.11.2009 DE 102009054086
(43) Veröffentlichungstag der Anmeldung: 26.09.2012
(73) Patentinhaber: Netzsch Gerätebau GmbH, 95100 Selb (DE)
(72) Erfinder: BLUMM, Jürgen, 95100 Selb (DE)
(86) Internationale Anmeldenummer: PCT/DE2010/001350
(87) Internationale Veröffentlichungsnummer: WO 2011/060768

(56) Entgegenhaltungen:
- WO-A1-99/31493
- WO-A2-2008/155406
- DE-A1- 4 320 781
- DE-T2- 60 121 497
- US-A- 4 255 961
- US-A- 5 288 147
- US-A- 5 982 014
- US-B1- 6 189 367
- US-B1- 6 406 918

## Beschreibung

Die vorliegende Erfindung betrifft ein System und ein Verfahren zur thermischen Analyse, wobei ein Probentiegel auf einer Probenseite und ein Referenztiegel auf eine Referenzseite angeordnet ist und wobei die beiden Tiegel in einer Messkammer angeordnet.

Ein thermisches Verfahren zur Materialanalyse ist die Differenz-Thermoanalyse (DTA) aus der Gruppe der Methoden der thermischen Analyse. Die DTA beruht auf einem charakteristischen Energieumsatz beim Phasenübergang und ermöglicht die qualitative Analyse. Es werden Temperaturen der Probe und einer ausgewählten Referenzsubstanz jeweils in einem Tiegel in einer symmetrischen Messkammer gemessen und verglichen. Die Referenzsubstanz ist so gewählt, dass sie im zu untersuchenden Temperaturbereich keine Phasenübergänge aufweist. Es erfolgt eine konstante Energiezufuhr durch einen Ofen. Über Temperaturfühler werden die Temperaturen unter beiden Tiegeln gemessen und die auftretende Differenz aufgezeichnet. Nur bei Phasenübergängen tritt eine solche Temperaturdifferenz im relevanten Umfang auf, aus deren Kurvenverlauf sich dann Rückschlüsse auf die Zusammensetzung der Probe ziehen lassen.

Aus der DTA wurde die dynamische Differenzkalorimetrie (engl.: Differential Scanning Calorimetry - DSC) weiterentwickelt. Statt wie bei der DTA die Temperaturdifferenz zwischen den beiden Tiegeln als Funktion der zugeführten Energie bzw. der Temperatur der Referenzsubstanz direkt aufzuzeichnen, wird bei der DSC daraus die Wärmestromdifferenz ermittelt. Daraus können charakteristische Temperaturen und kalorische Kenngrößen ermittelt werden.

Häufige Anwendungsgebiete der DTA sind die Untersuchung mineralischer Stoffe, wie zum Beispiel die Klinkerphasenbildung in Zementrohmehlen, die Erfassung der Reaktionswärme bei der Verbrennung von organischen Stoffen sowie die Charakterisierung von Kunststoffen. Dynamische Differenzkalorimeter (DDK, engl. Dynamic Differential Scanning Calorimeter, DDSCM) sind weltweit in der Materialcharakterisierung etabliert. Die Systeme werden für die Analyse von Polymeren, pharmazeutischen Werkstoffen, Textilien, Metallen, Keramiken und anderen organischen und anorganischen Materialien verwendet. Typischerweise werden bei diesen Messgeräten zwei keramische oder metallische Tiegel zur Probenaufnahme bzw. Referenz verwendet.

Zur Messung werden beide Tiegel zusammen in einen gemeinsamen Ofen oder jeweils in einen eigenen Ofen eingebracht, wobei ggf. beide Öfen parallel betrieben werden. Beide Tiegel werden demselben Temperaturprogramm unterzogen. Gemessen wird entweder der Unterschied in der elektrischen Leistung, die benötigt wird, um einen Temperaturunterschied zwischen beiden Tiegeln konstant, typischerweise bei 0 zu halten. Man spricht in diesem Fall von einer leistungskompensierenden DSC. Alternativ kann auch der Temperaturunterschied oder eine vergleichbare Größe der beiden Tiegel direkt gemessen werden. Der Temperaturunterschied kann, bei Verwendung des DTA-Prinzips, direkt aufgezeichnet werden. Ebenso kann der Temperaturunterschied in einen Unterschied im Wärmestrom umgerechnet werden. In diesem Fall spricht man von Wärmestrom-DSCs, welche aber einen dafür geeigneten Wärmestromsensor benötigen. Aus den Messgrößen können dann diverse Materialeigenschaften, wie Phasenumwandlungstemperaturen, spezifische Wärmen, Schmelz- und Erstarrungstemperaturen, etc., ermittelt werden. Die Methode der dynamischen Differenzkalorimetrie ist weltweit etabliert und standardisiert (ISO 11357, DIN 53765, ASTM E 967, ASTM 968 oder ASTM D 3418).

Heute werden diverse Einrichtungen und Verfahren benutzt, um dem Wärmestromunterschied zwischen der Probe und der Referenz zu bestimmen. Als Temperatursensoren oder als Heiz-/Kühleinrichtungen in einer DTA oder in einem dynamischen Differenzkalorimeter werden bisher gemäß praktischen Erfahrungen Widerstandsheizer, Widerstandsthermometer, Thermoelemente oder Thermosäulen verwendet. Bei einer leistungskompensierenden DSC benutzt man insbesondere zwei kleine Öfen, die mit einer Widerstandsheizung ausgestattet sind. Kommerzielle Systeme arbeiten häufig mit einer Platinheizwicklung. Bei den Wärmestrom-DSCs dagegen gibt es nur einen Ofen in dem ein Sensor mit zwei Flächen oder definierten Positionen für die Probe und die Referenzseite eingebaut ist. Während der Messung werden die Proben- und die Referenzseite jeweils mit einem entsprechenden Tiegel bestückt. Mit den Sensoren wird der Temperaturunterschied oder direkt der Wärmestromunterschied gemessen. Realisiert wird dies in der Praxis durch Kontaktierung der Proben- und der Referenzseite mit einer Temperaturmesseinrichtung. Bei DTAs werden dafür Thermoelemente verwendet, die im oder am Proben- und Referenztiegel angebracht sind. Bei Wärmestrom-DSCs erfolgt die Temperaturmessung mit Temperaturmesseinrichtungen die in oder an den jeweiligen Sensorflächen angebracht sind. Als Temperaturmesseinrichtungen werden heute in der Praxis zumeist PT100 Widerstandsthermometer, angeschweißte Thermoelemente oder Thermosäulen eingesetzt.

Das amerikanische Patent US 5,288,147 offenbart eine Vorrichtung zur thermischen Analyse bei der der Proben- und der Referenztiegel mit einem thermoelektrischen Generator zur Temperaturerfassung versehen sind. Diese Generatoren sind mit einem Rechner verbunden. Ebenfalls mit diesem Rechner sind ein Thermoelement und eine Heizeinheit, sowie verschiedene Kompensatoren verbunden. Über die Informationen die in dem Rechner zusammenlaufen wird die Heizleistung der Heizeinheit geregelt.

In der deutschen Patentanmeldung DE 103 55 126 A1 wird ein Verfahren zur Messung der bei chemischen oder physikalischen Umsetzungen frei werdenden Wärme vorgeschlagen. Die miteinander zur Umsetzung zu bringenden Komponenten werden einem Reaktor zugeführt und die dort frei werdende Wärme wird gemessen. Dabei werden die Komponenten dem Reaktor kontinuierlich zugeführt und die frei werdende Wärme wird bei im wesentlichen isothermer Temperaturführung des Reaktors gemessen, indem der Reaktor mit einem Seebeck-Element in wärmeleitenden Kontakt gebracht und der Reaktor mittels eines Peltier-Elementes so lange temperiert wird, bis die in dem Seebeck-Element induzierte elektrische Spannung im wesentlichen gleich null beträgt. Die Messung der bei der Umsetzung frei werdenden Wärme geschieht sodann in Abhängigkeit der an das Peltier-Element angelegten Spannung, welche zur Aufrechterhaltung einer in dem Seebeck-Element induzierten Spannung von im wesentlichen gleich null erforderlich ist oder in Abhängigkeit der in einem zweiten zwischen dem Reaktor und dem Peltier-Element angeordneten Seebeck-Element induzierten Spannung. Die Erfindung betrifft ferner eine Vorrichtung zur Durchführung eines solchen Verfahrens.

Somit liegt der Erfindung die Aufgabe zugrunde, ein System und ein Verfahren zu schaffen, mit dem die Auflösung bei der thermischen Analyse verbessert wird. Erfindungsgemäß wird diese Aufgabe mit einem System zur thermischen Analyse nach Anspruch 1 sowie einem Verfahren zur thermischen Analyse nach Anspruch 13 gelöst. Weitere bevorzugte und/oder vorteilhafte Ausgestaltungen der Erfindung ergeben sich aus den Unteransprüchen.

Es ist ein System zur thermischen Analyse offenbart welches mit einem Probentiegel auf einer Probenseite und mit einem Referenztiegel auf einer Referenzseite ausgestattet ist. Bei dem erfindungsgemäßen System befinden sich beide Tiegel in einer Messkammer. Der Probentiegel und der Referenztiegel sind je mit einem Peltiersystem zur Temperaturerfassung und/oder zur Temperatureinstellung versehen. Anstelle des Peltiersystems zur Temperaturerfassung ist ein thermoelektrischer Generator einsetzbar. Ebenso ist es vorstellbar, dass für die Temperaturerfassung, wie aus dem Stand der Technik bekannt und je nach Anwendungsgebiet, Widerstandsthermometer und/oder Thermoelemente eingesetzt werden.

Das System zur thermischen Analyse ist für die Durchführung einer dynamischen Differenzkalorimetrie oder einer Differentialthermoanalyse ausgelegt. In einer bevorzugten Ausführungsform ist das System zur thermischen Analyse rein als dynamisches Differenzkalorimeter ausgestaltet.

Die Proben- und die Referenzseite des Systems zur thermischen Analyse sind symmetrisch aufgebaut. Jedes Peltiersystem und/oder jeder thermoelektrische Generator besteht aus mindestens einem Material das für einen Einsatz über 200 °C. vorzugsweise über 700 °C, ausgelegt ist. Weiterhin ist jedes Peltiersystem und/oder jeder thermoelektrische Generator modular aus mehreren identischen Bauteilen aufgebaut. Dieser modulare Aufbau wird vor allem bei der Verwendung des Systems als dynamischen Differenzkalorimeters verwendet.

Jedes Peltiersystem ist elektrisch so kontaktiert, dass es einen Betrieb des Systems zur thermischen Analyse als dynamisches Wärmestrom-Differenzkalorimeter und/oder als leistungskompensierendes dynamisches Differenzkalorimeter zur Verfügung stellt. Weiterhin ist das System zur thermischen Analyse als dynamisches Hybrid-Differenzkalorimeter auf Peltierbasis ausgelegt. Das System ist wahlweise als dynamisches leistungskompensierendes dynamisches Differenzkalorimeter oder als Wärmestrom-Differenzkalorimeter betreibbar.

Das Peltiersystem und/oder der thermoelektrische Generator die sich innerhalb des dynamischen Differenzkalorimeters befindet bestehen aus einem SiGe-Halbleitermaterial. In jedem Peltiersystem und/oder in jedem thermoelektrischen Generator des dynamischen Differenzkalorimeters sind Tellur, Blei, Wismut oder Legierungen und/oder Kompositionen aus diesen Elementen enthalten. In einer bevorzugten Ausführungsform sind die vorab beschriebenen Bauteile des dynamischen Differenzkalorimeters aus Skutterudit-Systemen aufgebaut.

Die Oberfläche jedes Peltiersystem und/oder jedes thermoelektrischen Generators ist kratzfest und/oder korrosionsbeständig. Hierzu können zum Beispiel keramische Werkstoffe zum Einsatz kommen. Die Verwendung von kratz- und/oder korrosionsbeständigen Werkstoffe ist immer von den Betriebsbedingungen des Systems abhängig. Je nachdem, welche Temperaturen benötigt werden und/oder welche Materialien (Proben) untersucht werden, sind jeweils andere Werkstoffe für die Oberflächen zu wählen. Für den Fachmann ist klar, dass es für die Thermoanalyse viele geeignete Werkstoffe gibt. Das vorgenannte Beispiel stellt somit keine abschließende Beschränkung der Erfindung dar.

Weiterhin wird ein Verfahren zur thermischen Analyse offenbart, wobei ein System verwendet wird, welches mit einem Probentiegel auf einer Probenseite und mit einem Referenztiegel auf einer Referenzseite ausgestattet ist. Die Probenseite und die Referenzseite sind in einer Messkammer angeordnet. Beim Probentiegel und beim Referenztiegel wird zur Temperaturerfassung und/oder zur Temperatureinstellung ein auf dem Peltiereffekt basierendes System eingesetzt. Es ist ebenfalls möglich, dass beim Probentiegel und beim Referenztiegel ein thermoelektrischer Generator zur Temperaturerfassung verwendet wird.

Die Auflösung moderner dynamischer Differenzkalorimeter ist häufig begrenzt. Elektrische Leistungen, Widerstände oder Spannungen können nur mit begrenzter Auflösung erfasst werden. Bei herkömmlichen Thermoelementen kann die Empfindlichkeit des Systems über den Seebeck-Koeffizienten ermittelt werden. Platinbasierte herkömmliche Thermoelemente können zwar in einem weiten Temperaturbereich eingesetzt werden, besitzen aber nur einen geringen Seebeck-Koeffizienten (< 10 µV/K) und damit eine geringe Ausgangsempfindlichkeit. Andere herkömmliche Thermoelemente können zwar höhere Seebeck-Koeffizienten liefern, sind aber in ihrer Anwendung teilweise eingeschränkt. Es sind aus der Praxis keine konventionellen Thermoelemente mit Seebeck-Koeffizienten bekannt geworden, die über 100 µV/K liegen.

Aus der vorliegenden Erfindung geht nun hervor, dass sich höhere Seebeck-Koeffizienten mit speziellen Halbleitermaterialien erreichen lassen. So können mit dotiertem Wismut Tellurit (Bi₂Te₃) Seebeck-Koeffizienten von über 400 µV/K erreicht werden. Solche Systemelemente oder aus entsprechenden Modulen aufgebaute Systeme werden üblicherweise als Peltiersysteme oder thermoelektrische Generatoren bezeichnet. Durch eine Reihenschaltung mehrerer Elemente oder Module sind Seebeck-Koeffizienten von mehreren 1.000 µV/K möglich, wobei derartige Systeme auf sehr kleinem Raum realisiert werden können. Ferner existieren heute Halbleiterwerkstoffe, die für den Einsatz im überwiegenden Temperaturbereich von dynamischen Differenzkalorimetern bis 700 °C und darüber geeignet sind. Hierbei ist von besonderem Vorteil, dass solche Systeme wahlweise sowohl als Temperatursensoren als auch als Heiz- und Kühleinrichtungen eingesetzt werden können, ohne die Elemente oder Module technisch zu modifizieren; allein die elektrische Ansteuerung erfolgt anders. So können durch die kontrollierte Versorgung mit elektrischer Leistung zwei Elemente oder Module auf dieselbe Oberflächentemperatur gebracht werden. Das gleiche System zur thermischen Analyse kann aber auch durch Messung von Spannungen direkt dazu verwendet werden, Temperaturunterschiede zu messen. Für diesen Zweck kann prinzipiell dieselbe Anordnung eingesetzt werden, ohne dass ein Sensor (Peltiersystem oder thermoelektrischer Generator) ausgetauscht werden muss.

Ein Vorteil der Erfindung ist die Verwendung von Peltiersystemen für den Einsatz in einem klassischen dynamischen Differenzkalorimeter (Wärmestrom- oder leistungskompensierendes System). Die Peltiersysteme können dabei entweder als Heiz- oder als Kühleinrichtung verwendet werden. Somit kann auf einfache und genaue Weise ein Betrieb als leistungskompensierendes dynamisches Differenzkalorimeter realisiert werden. Genau so simpel und exakt kann das Peltiersystem als Temperatursensor eingesetzt werden, um ein klassisches dynamisches Wärmestrom-Differenzkalorimeter zu realisieren. Es können sowohl einzelne Peltierelemente als auch Module aus mehreren Peltierelementen als Temperaturmesseinrichtung oder als Heiz-/Kühleinrichtung eingesetzt werden.

Je nach gewünschter oder erforderlicher Empfindlichkeit im relevanten Einsatztemperaturbereich können dotierte Halbleitermaterialien verwendet werden, die in einem Temperaturbereich bis 700 °C und darüber arbeiten. Dieser Temperaturbereich entspricht dem überwiegenden Einsatztemperaturbereich von dynamischen Differenzkalorimetern. Es können Module aus mehreren Peltierelementen gestapelt oder in Serie geschaltet werden, um eine weitere Empfindlichkeitssteigerung zu erreichen. Zudem können Peltierelemente und -module mit kratzfesten und korrosionsbeständigen Oberflächen, wie beispielsweise keramischen Platten, ausgestattet werden, um zerstörungsfreies Handling und eine einfache Entfernung von Verunreinigungen sicherzustellen.

Im Folgenden sollen Ausführungsbeispiele die Erfindung und ihre Vorteile anhand der beigefügten Figuren näher erläutern.
Fig. 1 zeigt in einer Schemadarstellung ein erstes Ausführungsbeispiel eines Systems zur thermischen Analyse.
Fig. 2 zeigt in einer Schemadarstellung ein Detail eines zweiten Ausführungsbeispiels eines Systems zur thermischen Analyse.

Anhand der nachfolgend beschriebenen und in den Zeichnungen dargestellten Ausführungs- und Anwendungsbeispiele wird die Erfindung lediglich exemplarisch näher erläutert, d.h. sie ist nicht auf diese Ausführungs- und Anwendungsbeispiele oder auf die jeweiligen Merkmalskombinationen innerhalb einzelner Ausführungs- und Anwendungsbeispiele beschränkt. Verfahrens- und Vorrichtungsmerkmale ergeben sich jeweils analog auch aus Vorrichtungs- bzw. Verfahrensbeschreibungen.

Gleiche Bezugszeichen in den einzelnen Figuren und Abbildungen der Zeichnung bezeichnen gleiche oder ähnliche oder gleich oder ähnlich wirkende Komponenten.

Vorrichtungs- und Verfahrensmerkmale ergeben sich auch jeweils aus bildlichen und schriftlichen Darstellungen von Verfahren bzw. Vorrichtungen.

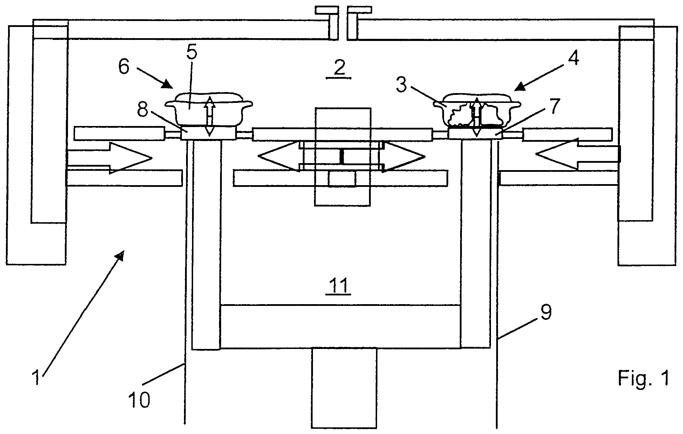

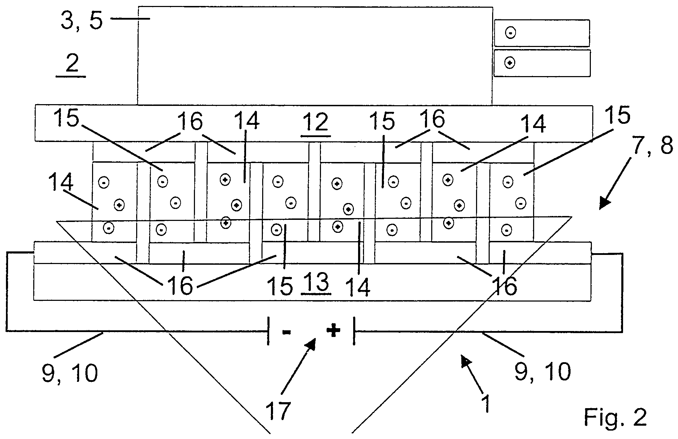

In den Fig. 1 und 2 sind jeweils schematisch in einem Querschnitt ein erstes Ausführungsbeispiel bzw. ein Detail eines zweiten Ausführungsbeispiels eines Systems zur thermischen Analyse 1 gezeigt. Diese Systeme zur thermischen Analyse 1 sind jeweils als dynamisches Differenzkalorimeter realisiert.

Ein erstes Ausführungsbeispiel für ein System zur thermischen Analyse 1 mit Implementierung einer peltierbasierenden Differenzkalorimetrie-Sensorik ist in der Fig. 1 schematisch in einem Querschnitt verdeutlicht. In einer Messkammer 2 ist ein Probentiegel 3 auf einer Probenseite 4 und ein Referenztiegel 5 auf einer Referenzseite 6 angeordnet. Jeweils am Boden sind der Probentiegel 3 und der Referenztiegel 5 mit einem thermoelektrischen Generator zur Temperaturerfassung und/oder einem Peltiersystem 7, 8 zur Temperatureinstellung versehen. Der thermoelektrische Generator zur Temperaturerfassung und das Peltiersystem 7, 8 zur Temperatureinstellung stellen jeweils Sensoreinrichtungen für die dynamische Differenzkalorimetrie dar. Ferner sind noch symbolisch elektrische Zuführungen 9, 10 zu den Peltiersystemen 7, 8 gezeigt. Die Messkammer 2 wird mittels allgemein auf dem betroffenen technischen Gebiet bekannten steuerbaren Heizeinrichtungen geheizt, so dass ein gewünschter oder erforderlicher Temperaturverlauf innerhalb der Messkammer 2 gewährleistet ist. Die Kombinationen aus Probentiegel 3 mit zugehörigem Peltiersystem 7 und Referenztiegel 5 mit zugehörigem Peltiersystem 8 sitzen auf einem Kühlblock 11.

In der Fig. 2 ist schematisch in einem Querschnitt ein Detail eines zweiten Ausführungsbeispiels eines Systems zur thermischen Analyse 1 gezeigt. Dargestellt ist im Vergleich zur Abbildung in der Fig. 1 in einer vergrößerten Darstellung die Kombination aus einem der Tiegel (Probentiegel 3 und Referenztiegel 5 sind identisch) mit einem Peltiersystem 7 oder 8. Wie auch die Darstellung des ersten Ausführungsbeispiels gemäß der Fig. 1 deutlich macht, hat das System zur thermischen Analyse 1 auf der Proben- und der Referenzseite 4 bzw. 6 einen symmetrischen Aufbau.

Das Peltiersystem 7 oder 8 (beide Peltiersysteme 7 und 8 sind identisch) enthält zwischen zwei Aluminiumoxidlagen 12 und 13 abwechselnd mehrere p-dotierte und n-dotierte SiGe-Halbleiter-Quader oder -Blöcke 14 bzw. 15. Weitere alternative Materialien sind: Tellur, Blei, Wismut, Legierungen daraus und/oder Komposite damit. Möglich ist auch ein Aufbau aus oder mit Skutterudit-Systemen. Die p- und n-dotierten SiGe-Halbleiter-Quader 14 bzw. 15 sind abwechselnd oben und unten durch Metallbrücken, beim vorliegenden Ausführungsbeispiel mit Goldkontakten 16, miteinander verbunden. Die Metallbrücken oder Goldkontakte 16 bilden vorzugsweise zugleich die thermischen Kontaktflächen und sind durch eine aufliegende Folie oder eine Keramikplatte (nicht sichtbar) isoliert. Immer zwei unterschiedliche Quader 14 und 15 sind so miteinander verbunden, dass sie eine Reihenschaltung ergeben. Ein zugeführter elektrischer Strom durchfließt alle Quader 14 und 15 nacheinander. Abhängig von der Stromstärke und -richtung kühlen sich z.B. die oberen Verbindungsstellen ab, während sich die unteren erwärmen. Der Strom pumpt somit Wärme von einer Seite auf die andere und erzeugt eine Temperaturdifferenz zwischen den Platten.

Eine sehr gebräuchliche Form von Peltierelementen oder -systemen 7, 8 besteht aus zwei meist quadratischen Platten 12, 13 aus Aluminiumoxid-Keramik mit einer Kantenlänge von 20 mm bis 90 mm und einem Abstand von 3 mm bis 5 mm, zwischen denen die Halbleiter-Quader 14 und 15 eingelötet sind. Die Keramikflächen sind hierzu an ihren zugewandten Flächen mit lötbaren Metallflächen (nicht dargestellt) versehen.

Gezeigt sind auch wieder die elektrischen Zuleitungen oder Zuführungen 9 (oder 10) sowie die beispielhafte Polung des entsprechenden elektrischen Anschlusses 17.

Als Weiterbildung kann noch vorgesehen sein, auf jeder Seite (Probenseite 4 und Referenzseite 6) noch einen Standardtemperatursensor (nicht gezeigt) zu integrieren, was dann allerdings nur der Temperaturmessung und nicht der Differenzmessung dient und was zwei zusätzliche Leitungen an jeder Sensorfläche bedingt. Die Peltierelemente oder -systeme dienen weiterhin dazu, die Temperaturunterschiede zwischen Probe und Referenz (oder genauer Probentiegel 3 und Referenztiegel 5) möglichst genau zu messen oder zu bestimmen.

Bei einem Hybridsensor werden die Peltiersysteme nicht für die Messung von Temperaturen verwendet, sondern es wird über die bei der vorstehenden Betriebsart vorhandenen Zuleitungen elektrische Leistung so eingekoppelt, dass sich kein Temperaturunterschied zwischen Probe und Referenz (oder genauer Probentiegel 3 und Referenztiegel 5) ergibt, und mit der dazu benötigen elektrischen Leistung wird die leistungskompensierende dynamische Differenzkalorimetrie realisiert.

### Bezugszeichen

- 1: System zur thermischen Analyse 1
- 2: Messkammer
- 3: Probentiegel
- 4: Probenseite
- 5: Referenztiegel
- 6: Referenzseite
- 7, 8: Peltiersystem
- 9, 10: elektrische Zuführungen
- 11: Kühlblock
- 12, 13: Aluminiumoxidlagen
- 14, 15: p-dotierte und n-dotierte SiGe-Halbleiter-Quader oder -Blöcke
- 16: Goldkontakte
- 17: elektrischer Anschluss

## Patentansprüche

1. System zur thermischen Analyse (1) mit einem Probentiegel (3) auf einer Probenseite (4) und einem Referenztiegel (5) auf einer Referenzseite (6) in einer Messkammer (2),
wobei die Proben- und die Referenzseite (4, 6) des Systems zur thermischen Analyse (1) symmetrisch aufgebaut sind,
wobei der Probentiegel (3) und der Referenztiegel (5) je mit einem Peltiersystem (7, 8) zur Temperaturerfassung und/oder zur Temperatureinstellung versehen sind,
wobei auf der Probenseite (4) eine erste Kombination (3, 7) aus Probentiegel (3) und einem zugehörigen, am Boden des Probentiegels (3) vorgesehenen ersten Peltiersystem (7) und auf der Referenzseite (6) eine zweite Kombination (5, 8) aus Referenztiegel (5) und einem zugehörigen, am Boden des Referenztiegels (5) vorgesehenen zweiten Peltiersystem (8) ausgebildet sind, wobei die beiden Kombinationen (3, 7; 5, 8) auf einem Kühlblock (11) sitzen,
und wobei das System dazu ausgebildet ist, bei der thermischen Analyse die Peltiersysteme (7, 8) sowohl als Temperatursensoren für die Temperaturerfassung als auch als Heiz- oder Kühleinrichtungen für die Temperatureinstellung einsetzen zu können.

2. System zur thermischen Analyse (1) nach Anspruch 1, **dadurch gekennzeichnet, dass** jedes Peltiersystem (7, 8) abwechselnd mehrere p- und n-dotierte Halbleiter-Elemente (14, 15) aufweist, die in Reihenschaltung miteinander verbunden sind.

3. System zur thermischen Analyse (1) nach einem der Ansprüche 1 oder 2, **dadurch gekennzeichnet, dass** das System zur thermischen Analyse (1) für die Durchführung einer dynamischen Differenzkalorimetrie oder einer Differentialthermoanalyse ausgelegt ist, oder dass das System zur thermischen Analyse bevorzugt ein dynamisches Differenzkalorimeter ist.

4. System zur thermischen Analyse (1) nach Anspruch 1 bis 3, **dadurch gekennzeichnet, dass** auf der Probenseite (4) und auf der Referenzseite (6) jeweils ein zusätzlicher Temperatursensor vorgesehen ist.

5. System zur thermischen Analyse (1) nach einem der vorhergehenden Ansprüche, **dadurch gekennzeichnet, dass** jedes Peltiersystem (7, 8) aus mindestens einem Material besteht, dass für einen Einsatz über 200 °C, vorzugsweise über 700 °C ausgelegt ist.

6. System zur thermischen Analyse (1) nach einem der vorhergehenden Ansprüche, **dadurch gekennzeichnet, dass** jedes Peltiersystem (7, 8) modular aus mehreren identischen Bauteilen aufgebaut ist.

7. System zur thermischen Analyse (1) nach einem der vorhergehenden Ansprüche, **dadurch gekennzeichnet, dass** jedes Peltiersystem (7, 8) elektrisch so kontaktiert ist, dass es einen Betrieb des Systems zur thermischen Analyse (1) als dynamisches Wärmestrom-Differenzkalorimeter und/oder als leistungskompensierendes dynamisches Differenzkalorimeter zur Verfügung stellt.

8. System zur thermischen Analyse (1) nach einem der vorhergehenden Ansprüche, **dadurch gekennzeichnet, dass** das System zur thermischen Analyse (1) als ein dynamisches Hybrid-Differenzkalorimeter auf Peltierbasis ausgelegt ist, welches wahlweise als dynamisches leistungskompensierendes oder Wärmestrom-Differenzkalorimeter betreibbar ist.

9. System zur thermischen Analyse (1) nach einem der vorhergehenden Ansprüche, **dadurch gekennzeichnet, dass** die Oberfläche jedes Peltiersystems (7, 8) kratzfest und/oder korrosionsbeständig ist.

10. System zur thermischen Analyse (1) nach einem der vorhergehenden Ansprüche, **dadurch gekennzeichnet, dass** jedes Peltiersystem (7, 8) welches sich innerhalb des dynamischen Differenzkalorimeters befindet auf einem SiGe-Halbleiter basiert.

11. System zur thermischen Analyse (1) nach einem der vorhergehenden Ansprüche, **dadurch gekennzeichnet, dass** in jedem Peltiersystem (7, 8) des dynamischen Differenzkalorimeters Tellur, Blei, Wismut oder Legierungen und/oder Kompositionen aus diesen Elementen enthalten sind.

12. System zur thermischen Analyse (1) nach einem der vorhergehenden Ansprüche, **dadurch gekennzeichnet, dass** jedes Peltiersystem (7, 8) insbesondere des dynamischen Differenzkalorimeters aus Skutterudit-Systemen aufgebaut ist.

13. Verfahren zur thermischen Analyse mittels eines Systems mit einem Probentiegel (3) auf einer Probenseite (4) und einem Referenztiegel (5) auf einer Referenzseite (6) in einer Messkammer (2),
wobei bei dem System die Proben- und die Referenzseite (4, 6) symmetrisch aufgebaut sind,
wobei beim Probentiegel (3) und beim Referenztiegel (5) zur Temperaturerfassung und/oder zur Temperatureinstellung ein auf dem Peltiereffekt basierendes System eingesetzt wird,
wobei auf der Probenseite (4) eine erste Kombination (3, 7) aus Probentiegel (3) und einem zugehörigen, am Boden des Probentiegels (3) vorgesehenen ersten Peltiersystem (7) und auf der Referenzseite (6) eine zweite Kombination (5, 8) aus Referenztiegel (5) und einem zugehörigen, am Boden des Referenztiegels (5) vorgesehenen zweiten Peltiersystem (8) ausgebildet sind, wobei die beiden Kombinationen (3, 7; 5, 8) auf einem Kühlblock (11) sitzen,
und wobei bei dem Verfahren die Peltiersysteme (7, 8) bei der thermischen Analyse sowohl als Temperatursensoren für die Temperaturerfassung als auch als Heiz- oder Kühleinrichtungen für die Temperatureinstellung eingesetzt werden.

14. Verfahren zur thermischen Analyse nach Anspruch 13, **dadurch gekennzeichnet, dass** jedes Peltiersystem (7, 8) abwechselnd mehrere p- und n-dotierte Halbleiter-Elemente (14, 15) aufweist, die in Reihenschaltung miteinander verbunden sind.

## Claims

1. A system for thermal analysis (1) with a sample crucible (3) on a sample side (4) and a reference crucible (5) on a reference side (6) in a measurement chamber (2),
wherein the sample side and the reference side (4, 6) of the system for thermal analysis (1) are constituted symmetrically,
wherein the sample crucible (3) and the reference crucible (5) are each provided with a Peltier system (7, 8) for temperature detection and/or for temperature adjustment,
wherein a first combination (3, 7) comprising the sample crucible (3) and an associated first Peltier system (7) provided at the bottom of the sample crucible (3) is formed on the sample side (4) and a second combination (5, 8) comprising a reference crucible (5) and an associated second Peltier system (8) provided at the bottom of the reference crucible (5) is formed on the reference side (6), wherein the two combinations (3, 7; 5, 8) sit on a cooling block (11),
and wherein the system is designed so that the Peltier systems (7, 8) can be used both as temperature sensors for temperature detection and also as heating or cooling devices for the temperature adjustment in the thermal analysis.

2. The system for thermal analysis (1) according to claim 1, **characterised in that** each Peltier system (7, 8) comprises alternately a plurality of p- and n-doped semiconductor elements (14, 15) which are connected to one another in series.

3. The system for thermal analysis (1) according to any one of claims 1 or 2, **characterised in that** the system for thermal analysis (1) is designed for carrying out a dynamic differential calorimetry or a differential thermal analysis, or that the system for thermal analysis is preferably a dynamic differential calorimeter.

4. The system for thermal analysis (1) according to claim 1 to 3, **characterised in that** an additional temperature sensor is provided in each case on the sample side (4) and on the reference side (6).

5. The system for thermal analysis (1) according to any one of the preceding claims, **characterised in that** each Peltier system (7, 8) is made of at least one material which is designed for use above 200 °C, preferably above 700 °C.

6. The system for thermal analysis (1) according to any one of the preceding claims, **characterised in that** each Peltier system (7, 8) is constructed in a modular manner comprising a plurality of identical components.

7. The system for thermal analysis (1) according to any one of the preceding claims, **characterised in that** each Peltier system (7, 8) is contacted electrically, in such a way that it provides an operation of the system for thermal analysis (1) as a dynamic heat-flow differential calorimeter and/or as a power-compensating dynamic differential calorimeter.

8. The system for thermal analysis (1) according to any one of the preceding claims, **characterised in that** the system for thermal analysis (1) is designed as a dynamic hybrid differential calorimeter on a Peltier basis, which can be operated optionally as a dynamic power-compensating or heat-flow differential calorimeter.

9. The system for thermal analysis (1) according to any one of the preceding claims, **characterised in that** the surface of each Peltier system (7, 8) is scratch-resistant and/or corrosion-resistant.

10. The system for thermal analysis (1) according to any one of the preceding claims, **characterised in that** each Peltier system (7, 8), which is located inside the dynamic differential calorimeter, is based on an SiGe semiconductor.

11. The system for thermal analysis (1) according to any one of the preceding claims, **characterised in that** tellurium, lead, bismuth or alloys and/or compositions of these elements are contained in each Peltier system (7, 8).

12. The system for thermal analysis (1) according to any one of the preceding claims, **characterised in that** each Peltier system (7, 8) in particular of the dynamic differential calorimeter is constituted by skutterudite systems.

13. A method for thermal analysis by means of a system with a sample crucible (3) on a sample side (4) and a reference crucible (5) on a reference side (6) in a measurement chamber (2),
wherein the sample side and the reference side (4, 6) are constituted symmetrically in the system,
wherein a system based on the Peltier effect is used in the case of the sample crucible (3) and in the case of the reference crucible (5) for temperature detection and/or for temperature adjustment,
wherein a first combination (3, 7) comprising the sample crucible (3) and an associated first Peltier system (7) provided at the bottom of the sample crucible (3) is formed on the sample side (4) and a second combination (5, 8) comprising a reference crucible (5) and an associated second Peltier system (8) provided at the bottom of the reference crucible (5) is formed on the reference side (6), wherein the two combinations (3, 7; 5, 8) sit on a cooling block (11),
and wherein in the method the Peltier systems (7, 8) are used both as temperature sensors for temperature detection and also as heating or cooling devices for the temperature adjustment in the thermal analysis.

14. The method for thermal analysis according to claim 13, **characterised in that** each Peltier system (7, 8) comprises alternately a plurality of p- and n-doped semiconductor elements (14, 15) which are connected to one another in series.

## Revendications

1. Système d'analyse thermique (1), pourvu d'un creuset d'essai (3) sur un côté d'essai (4) et d'un creuset de référence (5) sur un côté de référence (6) dans une chambre de mesure (2),
pour l'analyse (1) thermique, le côté d'essai et le côté de référence (4, 6) du système étant de structure symétrique,
le creuset d'essai (3) et le creuset de référence (5) étant munis chacun d'un système Peltier (7, 8) destiné à détecter la température et/ou à régler la température,
sur le côté d'essai (4) étant conçue une première association (3, 7) de creuset d'essai (3) et d'un premier système Peltier (7) associé, prévu sur le fond inférieur du creuset d'essai (3) et sur le côté de référence (6) étant conçue une deuxième association (5, 8) de creuset de référence (5) et d'un deuxième système Peltier (8) associé, prévu sur le fond inférieur du creuset de référence (5), les deux associations (3, 7 ; 5, 8) reposant sur un bloc de refroidissement (11),
et le système étant conçu pour permettre d'utiliser, lors de l'analyse thermique les systèmes Peltier (7, 8) aussi bien en tant que capteurs thermiques pour détecter la température qu'également en tant que systèmes de chauffage ou de refroidissement pour le réglage de la température.

2. Système d'analyse thermique (1) selon la revendication 1, **caractérisé en ce que** chaque système Peltier (7, 8) comporte plusieurs éléments à semi-conducteur (14, 15) dopés p et dopés n alternés, qui sont reliés les uns aux autres en connexion en série.

3. Système d'analyse thermique (1) selon l'une quelconque des revendications 1 ou 2, **caractérisé en ce que** le système d'analyse thermique (1) est conçu pour réaliser une calorimétrie différentielle dynamique ou une thermo-analyse différentielle ou **en ce que** le système d'analyse thermique est de préférence un calorimètre différentiel dynamique.

4. Système d'analyse thermique (1) selon la revendication 1 à 3, **caractérisé en ce que** sur le côté d'essai (4) et sur le côté de référence (6) est prévu respectivement un capteur de température additionnel.

5. Système d'analyse thermique (1) selon l'une quelconque des revendications précédentes, **caractérisé en ce que** chaque système Peltier (7, 8) est constitué d'au moins une matière qui est conçue pour une utilisation au-delà de 200 °C, de préférence au-delà de 700 °C.

6. Système d'analyse thermique (1) selon l'une quelconque des revendications précédentes, **caractérisé en ce que** chaque système Peltier (7, 8) est structuré de façon modulaire à partir de plusieurs éléments structurels identiques.

7. Système d'analyse thermique (1) selon l'une quelconque des revendications précédentes, **caractérisé en ce que** chaque système Peltier (7, 8) est en contact électrique, de sorte à mettre à disposition un fonctionnement du système d'analyse thermique (1) en tant que calorimètre différentiel dynamique à flux thermique et/ou en tant que calorimètre différentiel dynamique compensateur de puissance.

8. Système d'analyse thermique (1) selon l'une quelconque des revendications précédentes, **caractérisé en ce que** le système d'analyse thermique (1) est conçu sous la forme d'un calorimètre différentiel hybride dynamique sur base de Peltier, lequel est susceptible de fonctionner au choix en tant que calorimètre différentiel dynamique compensateur de puissance ou en tant que calorimètre différentiel dynamique à flux thermique.

9. Système d'analyse thermique (1) selon l'une quelconque des revendications précédentes, **caractérisé en ce que** la surface de chaque système Peltier (7, 8) est inrayable et/ou résistante à la corrosion.

10. Système d'analyse thermique (1) selon l'une quelconque des revendications précédentes, **caractérisé en ce que** chaque système Peltier (7, 8) qui se trouve à l'intérieur du calorimètre différentiel dynamique est basé sur un semi-conducteur SiGe.

11. Système d'analyse thermique (1) selon l'une quelconque des revendications précédentes, **caractérisé en ce que** dans chaque système Peltier (7, 8) du calorimètre différentiel dynamique sont contenus du tellure, du plomb, du bismuth ou des alliages et/ou des compositions desdits éléments.

12. Système d'analyse thermique (1) selon l'une quelconque des revendications précédentes, **caractérisé en ce que** chaque système Peltier (7, 8), notamment du calorimètre différentiel dynamique est structuré à partir de systèmes en skuttérudite.

13. Procédé d'analyse thermique au moyen d'un système pourvu d'un creuset d'essai (3) sur un côté d'essai (4) et d'un creuset de référence (5) sur un côté de référence (6) dans une chambre de mesure (2),
sur le système, le côté d'essai et le côté de référence (4, 6) étant de structure symétrique,
pour la détection de la température et/ou pour le réglage de la température, un système basé sur l'effet Peltier étant utilisé sur le creuset d'essai (3) et sur le creuset de référence (5),
sur le côté d'essai (4) étant conçue une première association (3, 7) du creuset d'essai (3) et d'un premier système Peltier (7) associé, prévu sur le fond inférieur du creuset d'essai (3) et sur le côté de référence (6) étant conçue une deuxième association (5, 8) du creuset de référence (5) et d'un deuxième système Peltier (8) associé, prévu sur le fond inférieur du creuset de référence (5), les deux associations (3, 7 ; 5, 8) reposant sur un bloc de refroidissement (11),
et lors du procédé, pour l'analyse thermique, les systèmes Peltier (7, 8) étant utilisés aussi bien en tant que capteurs thermiques pour détecter la température qu'également en tant que systèmes de chauffage ou de refroidissement pour le réglage de la température.

14. Procédé d'analyse thermique selon la revendication 13, **caractérisé en ce que** chaque système Peltier (7, 8) comporte plusieurs éléments à semi-conducteur (14, 15) dopés p et dopés n alternés, qui sont reliés les uns aux autres en connexion en série.
